# EUROPEAN PATENT APPLICATION

(11) **EP 1 677 520 A1**
(43) Date of publication of application: **05.07.2006**
(21) Application number: 04258187.6
(22) Date of filing: 30.12.2004
(51) Int. Cl.: H04N 5/232

(54) **Apparatus for wireless operation and control of a camera**

(71) Applicant: Research In Motion Limited, Waterloo, Ontario N2L 3W8 (CA)
(72) Inventor: Kennedy, John, Waterloo, Ontario N2K 4E4 (CA)
(74) Representative: Roberts, Gwilym Vaughan

(57) **Abstract**

A camera system and associated method including a digital camera that captures an image and creates a digital signal representative thereof and a wireless control apparatus. The digital camera wirelessly transmits the digital signal to the wireless control apparatus. The wireless control apparatus includes a display device, such as an LCD, for displaying a displayed image based on the digital signal. The wireless control apparatus also includes an input apparatus used to cause the wireless control apparatus to generate one or more controls signals which are wirelessly transmitted to the digital camera for execution thereby.

## Description

### BACKGROUND OF THE INVENTION

### Field of the Invention

The invention relates to an apparatus for wirelessly operating and controlling a digital camera and, more particularly, to an apparatus for wirelessly providing viewfinder and other control functions to a remotely located digital camera.

### Background Information

One of the most significant technological changes occurring over the last two decades or so has been the increasing use of digital information (represented by 1s and 0s or bits) in devices as opposed to conventional analog information (represented by gradually fluctuating waves). In recent years, this technological change has lead to a growing shift in the photography and videography field, particularly among recreational users, from conventional (film) cameras that depend entirely on chemical and mechanical processes to produce an image to digital cameras that record images in an entirely electronic form. In a digital camera, an image is stored as a long string of bits (1s and 0s) that represent all of the tiny colored dots, or pixels, that collectively make up the image. As used herein, the term "camera" shall refer to both still cameras for capturing static images and video cameras for capturing moving images.

One problem that exists in the field of photography and videography is that often times the most desirable location from which to capture an image does not lend itself well to the operation of the camera. In other words, it is often the case that it is not practical or possible to look through the camera's viewfinder and operate the camera to capture a desired image from a particular desired location or angle. For example, a user may want to capture an image from on top of a wall or other location that is not conveniently or safely reachable, or may want to capture an image above and over a crowd, such as at a sporting event like a golf tournament. With current cameras, both conventional and digital, a user would typically have to stretch their arm with the camera in hand and blindly capture the image (the user is unable to look through the viewfinder). Some cameras include wired remote control devices that enable the cameras to be placed and operated in locations remote from the user, but again, in such cases, the user must blindly capture the image.

Thus, there is a need for an apparatus that would enable a user to remotely view possible images that may be captured by a digital camera and remotely control the operation of the digital camera.

### SUMMARY OF THE INVENTION

The invention relates to a camera system including a digital camera and a wireless control apparatus. The digital camera captures an image, such as with a CCD or other imaging element, and creates a digital signal representative of the image. The digital camera includes a first wireless communications device that receives the digital signal and wirelessly transmits the digital signal to the wireless control apparatus. The wireless control apparatus has a second wireless communications device for wirelessly receiving the transmitted digital signal. The wireless control apparatus also includes a display device, such as an LCD, for displaying a displayed image based on the digital signal. The wireless control apparatus also preferably includes a processor in electronic communication with the second wireless communications device and the display device that causes the displayed image to be displayed on the display device.

Furthermore, the wireless control apparatus also preferably includes an input apparatus used to generate one or more control signals for controlling the digital camera that are wirelessly transmitted by the second wireless communications device to the digital camera. In one embodiment, the digital camera includes a memory and the one or more control signals cause the digital signal to be saved in the memory (for later printing or viewing).

In one embodiment, the wireless communications device is selectively attachable to the digital camera, such as to the rear surface thereof. In another embodiment, the wireless control apparatus is a handheld electronic device having an application for operating and controlling the digital camera and at least one other application, such as a phone application, an address book application, a messaging application, or a calendar application. Furthermore, the digital camera may be a digital still camera or a digital video camera.

The invention also relates to a method of operating a digital camera, including the following steps: capturing an image and creating a digital signal representative of the image using the digital camera; wirelessly transmitting the digital signal to a wireless control apparatus in a location removed from the digital camera; receiving the digital signal at the wireless control apparatus and displaying a displayed image based on the digital signal; generating one or more control signals for controlling the digital camera using the wireless control apparatus; wirelessly transmitting the one or more control signals to the digital camera; and causing the digital camera to execute a function associated with the one or more control signals, such as saving the digital signal in memory, when the digital camera receives the one or more control signals.

### BRIEF DESCRIPTION OF THE DRAWINGS

A full understanding of the invention can be gained from the following Detailed Description of the Preferred Embodiments when read in conjunction with the accompanying drawings in which:
Figure 1 is a block diagram of a digital camera according to an aspect of the invention;
Figure 2 is block diagram of a wireless control apparatus according to an aspect of the invention;
Figures 3 and 4 are schematic illustrations of a digital camera and a wireless control apparatus according to one embodiment of the invention; and
Figures 5 and 6 are a front view and a block diagram, respectively, of a handheld electronic device that may be utilized as a wireless control apparatus according to a further aspect of the invention.

Similar numerals refer to similar parts throughout the specification.

### DETAILED DESCRIPTION OF THE PREFERRED EMBODIMENTS

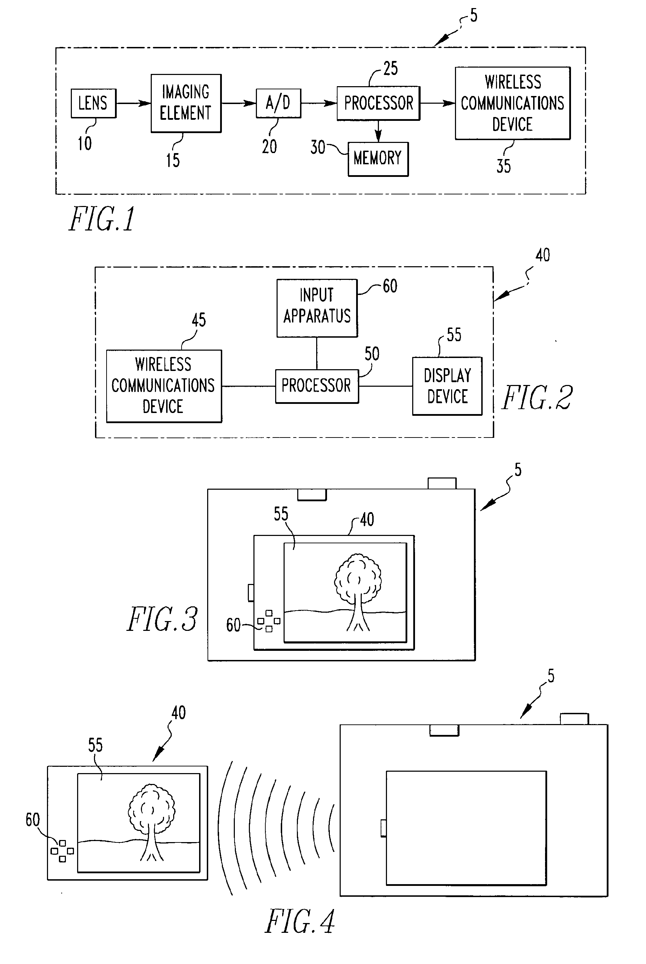

Figure 1 is a block diagram of a digital camera 5, such as a digital still camera or digital video camera, according to an aspect of the invention. Like a conventional film camera, digital camera 5 includes lens 10 for focusing light to create an image of a scene. In a conventional film camera, the lens focuses the light onto a piece of film. In digital camera 5, lens 10 focuses the light onto imaging element 15. Imaging element 15 converts the light (photons) into electrical charges. Imaging element 15 is preferably a charge coupled device (CCD). A CCD is a collection of tiny, light-sensitive devices (including diodes or capacitors) that convert incident light to electrical charges. Imaging element 15 may also be a complementary metal oxide semiconductor (CMOS) image sensor or any other known image sensor.

As seen in Figure 1, imaging element 15 is in electronic communication with analog-to-digital converter (A/D) 20. A/D 20 takes the electrical charges output by imaging element 15 and converts them to digital form, thereby creating a digital signal representative of the light image that is focused by lens 10. A/D 20 is in electronic communication with processor 25, which may be, without limitation, a microprocessor. As will be appreciated, A/D 20 may be part of processor 25 rather than a separate component. Processor 25 controls the operation of digital camera 5 and performs various functions including, without limitation, storing the images captured by imaging element 15 in memory 30. Memory 30 may be a built-in memory, such as a built-in flash memory, or a removable memory module, such as a removable flash memory module (e.g., a SmartMedia Card, a CompactFlash Card or a Memory Stick). Processor 25 is in electronic communication with wireless communications device 35. Wireless communications device 35 may be a wireless transceiver or a separate transmitter and receiver. Wireless communications device 35 enables digital camera 5 to wirelessly transmit and receive data, including digital signals representative of captured images, such as by using radio frequency (RF) waves (for example, according to the Bluetooth protocol or other known RF protocols) or infrared light.

Figure 2 is a block diagram of a wireless control apparatus 40 according to a further aspect of the invention. Wireless control apparatus 40 includes wireless communications device 45 that is similar to wireless communications device 35. Wireless communications device 45 is able to wirelessly transmit and receive data. In particular, wireless communications device 45 is able to wirelessly receive data from and transmit data to wireless communications device 35. As seen in Figure 2, wireless communications device 45 is in electronic communication with processor 50, which may be, without limitation, a microprocessor. Processor 50 is in electronic communication with a display device 55, such as an LCD or the like. Display device 55 is able to display images based on signals received from processor 50. Processor 50 is also in electronic communication with input apparatus 60. Input apparatus 60 may be one or more buttons, a keypad, a thumbwheel, a jog dial, or any combination thereof and the like, and is used to input information, such as command selections, into wireless control apparatus 40, an in particular, into processor 50.

In operation, digital camera 5 is able to capture light images using lens 10 and imaging element 15, convert the light images to digital signals using A/D 20 and, through cooperation of processor 20 and wireless communications device 35, wirelessly transmit the digital signals to wireless control apparatus 40 via wireless communications device 45. The digital signals are, in turn, sent to processor 50 and images represented by the digital signals are displayed by display device 55. Wireless control apparatus 40 is able to, from a location removed from digital camera 5, continuously receive and display the images being captured by digital camera 5. In addition, input apparatus may be used to input into processor 50 various signals for controlling the operation of digital camera 5, including, but not limited to, signals that would cause a particular image (or images in the case of a digital video camera) to be saved in memory 30 *(i.e.,* snap a picture), cause lens 10 to be selectively focused, cause lens 10 to zoom in and out, change aperture selections, and control a flash. Thus, as will be appreciated, wireless control apparatus 40 is able to function as a remote viewfinder for digital camera 5, thereby enabling digital camera 5 to be placed in a first location, such as a location that is not easily accessible, with the viewing of images and control of digital camera 5 taking place at a second, removed location. For example, a user could hold digital camera 5 above his or her head in a crowd, such as in a gallery at a golf tournament, and view the images being captured and perform various control functions using wireless control apparatus 40 at eye level. In addition, the fact that wireless control apparatus 40 may be used separately from digital camera 5 will eliminate vibrations and the resulting distorted images that often occur when a user holds a digital camera while capturing images.

Referring to Figures 3 and 4, in one embodiment of the invention, wireless control apparatus 40 may be selectively attached to and detached from the rear surface of digital camera 5 using any of a variety of known mechanical attachment means. For example, a detachment button may be provided which actuates a latch or other suitable attaching mechanism that releasably holds wireless control apparatus 40 to the back of digital camera 5. Alternatively, wireless control apparatus 40 may be a device that is separate from and not meant to be attached to digital camera 5.

Preferably, digital camera 5 and wireless control apparatus 40 are provided with a security system to ensure that only the particular control apparatus 40 associated with a particular digital camera 5 is able to communicate with and control the particular digital camera 5, and in turn to ensure that a particular wireless control apparatus 40 will only display images from a particular, associated digital camera 5. In other words, a security system is preferably provided that makes sure that a particular digital camera 5 will not respond to signals from apparatuses other than the associated wireless control apparatus 40 and that makes sure that a particular wireless control apparatus 40 will not display images captured by other, non-associated digital cameras 5. This may be accomplished in a number of known ways, including dedicating a particular frequency to the paired devices or requiring the two devices to become a matched pair, such as by exchanging and verifying pre-stored personal identification numbers (PINs) or the like, before cooperative operation between the two can occur.

In addition, according to another aspect of the invention, a wireless control apparatus 40 may be adapted to selectively pair with and control more than one digital camera 5. This may be accomplished by assigning a different PIN or a different frequency to each digital camera 5 to be controlled, and enabling wireless control apparatus 40 to selectively operate using one of the PINs or frequencies. In this case, a user may use a single wireless control apparatus 40 in connection with a number of digital cameras 5 that the user owns (e.g., two digital still cameras and a digital video camera).

According to one particular embodiment of the invention, wireless control apparatus 40 may be a handheld electronic device such as, for instance, a personal data assistant (PDA), a handheld computer, a two-way pager, a cellular telephone, and the like, that provides access to a number of integrated applications, including, without limitation, email, telephone, short message service (SMS), multimedia messaging service (MMS), browser, calendar and address book applications, such that a user can easily manage information and communications from a single, integrated device. These applications are typically selectively accessible and executable through a user interface that allows a user to easily navigate among and within these applications. Examples of such handheld electronic devices are included in U.S. Patent Nos. 6,452,588 and 6,489,950, which are incorporated by reference herein.

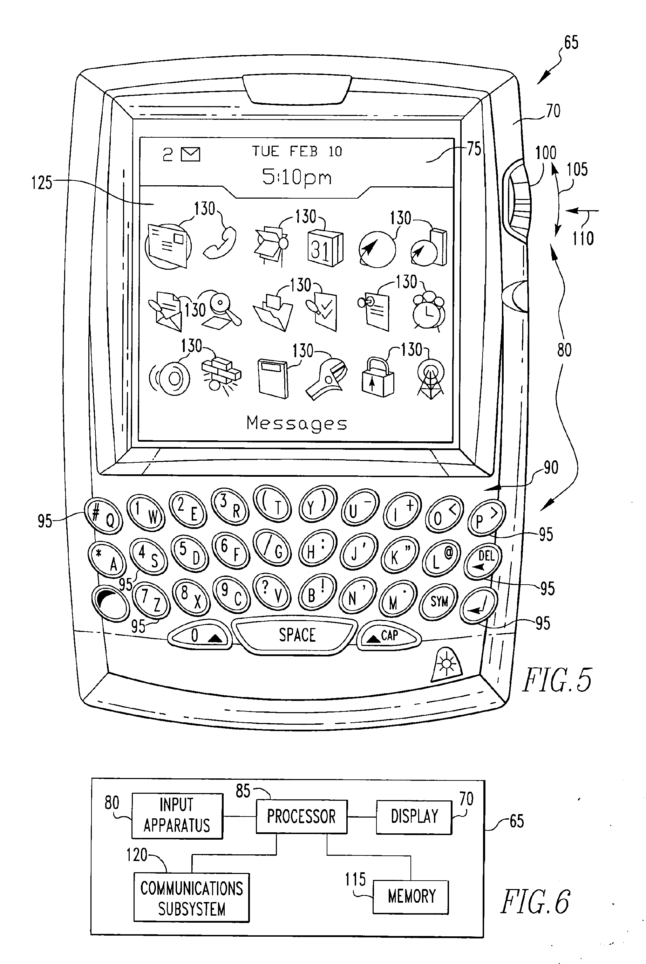

An example handheld electronic device 65 in accordance with this aspect of the invention is depicted generally in Figures 5 and 6. The handheld electronic device 65 includes a housing 70, a display 75, an input apparatus 80, and a processor 85 (Figure 6) which may be, without limitation, a microprocessor (µP). The processor 85 is responsive to inputs received from the input apparatus 80 and provides outputs to the display 70.

As can be understood from Figure 5, the input apparatus 80 includes a keyboard 90 having a plurality of keys 95, and a rotatable thumbwheel 100 that may be rotated in the direction of the arrow 105 and moved laterally in the direction of the arrow 110. The keys 95 and the rotatable thumbwheel 100 are input members of the input apparatus 80, and each of the input members has a function assigned thereto. As used herein, the expression "function" and variations thereof can refer to any type of process, task, procedure, routine, subroutine, function call, or other type of software or firmware operation that can be performed by the processor 85 of the handheld electronic device 65.

As is shown in Figure 6, the processor 85 is in electronic communication with memory 115. Memory 115 can be any of a variety of types of internal and/or external storage media such as, without limitation, RAM, ROM, EPROM(s), EEPROM(s), and the like, that provide a storage register for data storage such as in the fashion of an internal storage area of a computer, and can be volatile memory or nonvolatile memory. The memory 115 further includes a number of applications executable by processor 85 for the processing of data. The applications can be in any of a variety of forms such as, without limitation, software, firmware, and the like, and the term "application" herein shall include one or more routines, subroutines, function calls or the like, alone or in combination.

As is also shown in Figure 6, processor 85 is in electronic communication with communications subsystem 120. Communications functions for handheld electronic device 65, including data and voice communications and short range wireless communications, are performed through communications subsystem 120. Communications subsystem 120 includes one or more transmitter and receiver units (possibly combined in single transceiver components) and one or more antennas. Other known components, such as a digital signal processor and a local oscillator, may also be part of communications subsystem 120. The specific design and implementation of communications subsystem 120 is dependent upon the communications network or networks in which handheld electronic device 65 is intended to operate. For example, handheld electronic device 4 may include a communications subsystem 120 designed to operate with the Mobitex™, DataTAC™ or General Packet Radio Service (GPRS) mobile data communication networks and also designed to operate with any of a variety of voice communications networks, such as AMPS, TDMA, CDMA, PCS, GSM, and other suitable networks. Other types of data and voice networks, both separate and integrated, may also be utilized with handheld electronic device 65. Such networks may include the 1xRTT, EVDO, EVDV and wCDMA, 802.11 a-g and UMTS data networks. In addition, communications subsystem 120 may designed to operate with a number of short range wireless technologies and protocols, such as Bluetooth or other RF protocols and infrared communications protocols.

In Figure 5, the display 70 is depicted as displaying a home screen 125 that includes a number of applications depicted as discrete icons 130, including an icon representing a phone application, an address book application, a messaging application which includes email, SMS and MMS applications, and a calendar application.

In Figure 5, the home screen 125 is currently active and would constitute a portion of an application. Other applications can be initiated from the home screen 125 by providing an input through the input apparatus 80, such as by rotating the thumbwheel 100 and providing a selection input by translating the thumbwheel 100 in the direction indicated by the arrow 110 in Figure 5. In addition, according to the invention, handheld electronic device 65 is provided with an application for operating and controlling a digital camera 5 as described elsewhere herein. In such a situation, processor 85 may perform the function of processor 50 of Figure 2, display 70 may perform the function of display device 55 of Figure 2, input apparatus 80 may perform the function of input apparatus 60 of Figure 2, and communications subsystem 120 may perform the function of wireless communications device 45 of Figure 2. As such, handheld electronic device 65 may function as a remote viewfinder and device for controlling operation of a digital camera 5.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A camera system, comprising:
a digital camera, said digital camera capturing an image and creating a digital signal representative of said image, said digital camera having a first wireless communications device, said first wireless communications device receiving said digital signal and wirelessly transmitting said digital signal; and
a wireless control apparatus, said wireless control apparatus including a second wireless communications device, said second wireless communications device wirelessly receiving said digital signal transmitted by said first wireless communications device, and a display device, said display device displaying a displayed image based on said digital signal.

2. The camera system according to claim 1, wherein said wireless control apparatus includes a processor in electronic communication with said second wireless communications device and said display device, said processor causing said displayed image to be displayed on said display device.

3. The camera system according to claim 2, wherein said wireless control apparatus includes an input apparatus in electronic communication with said processor, said input apparatus being used to generate one or more control signals for controlling said digital camera, said one or more control signals being wirelessly transmitted by said second wireless communications device and wirelessly received by said first wireless communications device.

4. The camera system according to claim 3, wherein said digital camera includes a memory and wherein said one or more control signals cause said digital signal to be saved in said memory.

5. The camera system according to claim 1, wherein said digital camera includes an imaging element and an analog-to-digital converter, said imaging element receiving light representative of said image and converting said light into a plurality of electrical charges, said analog-to-digital converter converting said plurality of electrical charges into said digital signal.

6. The camera system according to claim 1, wherein said display device is an LCD.

7. The camera system according to claim 1, wherein said wireless communications device is selectively attachable to said digital camera.

8. The camera system according to claim 7, wherein said digital camera has a rear surface, said wireless communications device being selectively attachable to said rear surface.

9. The camera system according to claim 1, wherein said wireless control apparatus is a handheld electronic device having an application for operating and controlling said digital camera and at least one other application.

10. The camera system according to claim 9, wherein said at least one other application comprises one or more of a phone application, an address book application, a messaging application, and a calendar application.

11. The camera system according to claim 1, wherein said digital camera is a still camera.

12. The camera system according to claim 1, wherein said digital camera is a video camera.

13. The camera system according to claim 1, wherein said first wireless communications device transmits and receives information only on a particular predetermined frequency, and said second wireless communications device transmits and receives information only on said particular predetermined frequency.

14. The camera system according to claim 2, wherein said wireless control apparatus has an identification number associated therewith, and wherein said processor is adapted to cause said display device to display said displayed image only if said processor receives said identification number from said second wireless communications device.

15. The camera system according to claim 3, wherein said digital camera includes a second processor and has an identification number associated therewith, and wherein said second processor is adapted to execute said one or more control signals only if said second processor receives said identification number from said first wireless communications device.

16. The camera system according to claim 1, wherein said second wireless communications device is adapted to selectively transmit and receive information on a plurality of frequencies.

17. The camera system according to claim 2, wherein said processor is adapted to cause said second wireless communications device to selectively transmit one of a plurality of identification numbers, one of said plurality of identification numbers being associated with said digital camera, and at least one of said plurality of identification numbers being associated with at least one other digital camera.

18. A method of operating a digital camera, comprising:
capturing an image and creating a digital signal representative of said image using said digital camera;
wirelessly transmitting said digital signal to a wireless control apparatus in a location removed from said digital camera;
receiving said digital signal at said wireless control apparatus and displaying a displayed image based on said digital signal;
generating one or more control signals for controlling said digital camera using said wireless control apparatus;
wirelessly transmitting said one or more control signals to said digital camera; and
causing said digital camera to execute a function associated with said one or more control signals when said digital camera receives said one or more control signals.

19. The method according to claim 18, wherein said function causes said digital signal to be saved in a memory of said digital camera.

20. The method according to claim 18, wherein said capturing step comprises receiving light representative of said image and converting said light into a plurality of electrical charges, and said creating step comprises converting said plurality of electrical charges into said digital signal.

21. The method according to claim 18, wherein said wireless control apparatus is a handheld electronic device having an application for performing said generating step and at least one other application.

22. The method according to claim 21, wherein said at least one other application comprises one or more of a phone application, an address book application, a messaging application, and a calendar application.

23. The method according to claim 18, wherein said digital camera is a still camera.

24. The method according to claim 18, wherein said digital camera is a video camera.

25. The method according to claim 18, wherein said wireless transmitting steps are performed using only a particular predetermined frequency.

26. The method according to claim 18, wherein said wireless control apparatus has an identification number associated therewith, and wherein said displaying step is performed only if said wireless control apparatus receives said identification number from said digital camera.

27. The method according to claim 18, wherein said digital camera has an identification number associated therewith, and wherein said causing step is performed only if said digital camera receives said identification number from said wireless control apparatus.
